(19) Europäisches Patentamt
European Patent Office
Office européen des brevets

(11) EP 2 273 659 A1

(12) **EUROPEAN PATENT APPLICATION**

(43) Date of publication:
**12.01.2011 Bulletin 2011/02**

(51) Int Cl.:
***H02M 3/07*** *(2006.01)*

(21) Application number: **09165145.5**

(22) Date of filing: **10.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
• **Mitsubishi Electric R&D Centre Europe B.V.**
**1119 NS  Schiphol Rijk (NL)**

• **Mitsubishi Electric Corporation**
**Tokyo 100-8310 (JP)**

(72) Inventor: **Buiatti, Gustavo**
**35708 Rennes Cedex 07 (FR)**

(74) Representative: **Maillet, Alain**
**Cabinet Le Guen Maillet**
**5 Place Newquay**
**B.P. 70250**
**35802 Dinard Cedex (FR)**

(54) **Method and an apparatus for obtaining information enabling the determination of the maximum power point of a power source**

(57)    The present invention concerns an apparatus for obtaining information enabling the determination of the maximum power point of a power source providing current intended to a boost converter composed of a number n of bridge devices connected in series, each bridge device being composed of plural switches and a capacitor, the boost converter comprising a snubber circuit comprising a snubber capacitor. The apparatus comprises means for monitoring the voltage of the snubber capacitor in order to obtain information enabling the determination of the maximum power point of the power source.

Fig. 1

EP 2 273 659 A1

**Description**

The present invention relates generally to a method and an apparatus for obtaining information enabling the determination of the maximum power point of a power source like a photovoltaic cell or an array of cells or a fuel cell.

A photovoltaic cell directly converts solar energy into electrical energy. The electrical energy produced by the photovoltaic cell can be extracted over time and used in the form of electric power. The direct electric power provided by photovoltaic cell is provided to conversion devices like DC-DC up/down converter circuits and/or DC/AC inverter circuits.

However, the current-voltage droop characteristics of photovoltaic cells cause the output power to change nonlinearly with the current drawn from photovoltaic cells. The power-voltage curve changes according to climatic variations like light radiation levels and operation temperatures.

The near optimal point at which to operate photovoltaic arrays is at or near the region of the current-voltage curve where power is greatest. This point is denominated as the Maximum Power Point (MPP).

It is important to operate the photovoltaic cells around the MPP to optimize their power generation efficiency.

As the power-voltage curve changes according to climatic variations, the MPP also changes according to climatic variations.

It is then necessary to be able to identify the MPP at any time.

Charge pumps, also known as DC/DC converters or boost converters composed of plural bridge devices use capacitors as energy storage elements. When compared to inductive switching DC/DC converters, which also use inductors as energy storage elements, charge pumps offer unique characteristics that make them attractive for certain end-user applications.

Conventional boost converters when operating in Continuous Current Mode (CCM) increase the voltage of the input by a ratio $r = V_{out}/V_{in} = 1/(1-D)$, where D is the duty cycle (between 0 and 1) of the main switch of the boost converter.

The main difference between conventional boost converters and boost converters composed of plural bridge devices relies on the fact that the latter can only achieve some discrete values of voltage step-up ratio.

Boost converters composed of plural bridge devices are sometimes used for converting the electric energy provided by a power source into another form.

The present invention aims at providing a method and an apparatus for obtaining information enabling the determination of the maximum power point of a power source without adding an important number of components, or even without adding any extra component, to existing boost converters composed of plural bridge devices.

To that end, the present invention concerns an apparatus for obtaining information enabling the determination of the maximum power point of a power source providing current intended to a boost converter composed of a number n of bridge devices connected in series, each bridge device being composed of plural switches and a capacitor, the boost converter comprising a snubber circuit comprising a snubber capacitor, **characterised in that** the apparatus for obtaining information enabling the determination of the maximum power point of the power source comprises means for monitoring the voltage of the snubber capacitor in order to obtain information enabling the determination of the maximum power point of the power source.

The present invention concerns also a method for obtaining information enabling the determination of the maximum power point of a power source providing current intended to a boost converter composed of a number n of bridge devices connected in series, each bridge device being composed of plural switches and a capacitor, the boost converter comprising a snubber circuit comprising a snubber capacitor, **characterised in that** the method for obtaining information enabling the determination of the maximum power point of the power source comprises the step of monitoring the voltage of the snubber capacitor in order to obtain information enabling the determination of the maximum power point of the power source.

Thus, it is possible to obtain information enabling the determination of the maximum power point of a power source without adding an important number of components, or even without adding any extra component, to existing boost converters composed of plural bridge devices.

According to a particular feature, the snubber circuit further comprises a snubber resistor and a snubber diode, the snubber diode and the snubber resistor being connected in parallel, the anode of the snubber diode being connected to the positive terminal of the power source, the positive terminal of the snubber capacitor being connected to the snubber resistor and to the cathode of the snubber diode, the negative terminal of the snubber capacitor being connected to the negative terminal of the power source.

According to a particular feature, the apparatus for obtaining information enabling the determination of the maximum power point of the power source further comprises an additional capacitor, the positive terminal of which being connected to the positive terminal of the snubber capacitor, the negative terminal of which being connected to a first terminal of an additional switch, the second terminal of the additional switch being connected to the negative terminal of the snubber capacitor.

Thus, it is possible to connect the additional capacitor in parallel with the snubber capacitor during the time period in which both capacitors will be charged and the voltage on them will be sampled.

By connecting two capacitors in parallel, the total capacitance value is significantly increased particularly when the capacitance value of the additional capacitor is much higher than the capacitance of the snubber capacitor. As the voltage variations on the capacitors evolves slowly, it is possible to obtain much more samples for obtaining information enabling the determination of the maximum power point of the power source. Information enabling the determination of the maximum power point of the power source like the voltage-current/voltage-power droop characteristics are more accurate without the need of expensive devices which would be able to sample the voltage at very high sampling frequencies.

Once the sampling is done, it is possible to discharge the additional capacitor and to disconnect it from the rest of the system, allowing the converter to work properly with the snubber circuit as it should be.

According to a particular feature, the means for monitoring the voltage of the snubber capacitor monitor the voltage charge of the snubber capacitor and of the additional capacitor.

Thus, it is possible to monitor the output voltage of the power source during the period of time intended to characterize the power source where both capacitors are connected in parallel.

It is also possible to monitor the same output voltage of the power source during normal operation of the converter when only the snubber capacitor is connected to the system. This is possible since the voltage difference between the snubber capacitance and the output of the power source is very small if the snubber is designed to operate in rate of rise voltage control mode.

Furthermore, only one device allowing means for monitoring the voltage on both capacitors and operation modes is necessary.

According to a particular feature, the measured voltage at consecutive samples surrounding a given sample are processed using a fitted mathematical function obtained by minimizing the sum of the squares of the difference between the measured voltages at consecutive samples and mathematical functions in order to obtain a processed voltage for the given sample.

Thus, the noise that might appear on the measured voltage sample is already filtered by the polynomial function resulting in an improved voltage estimation for that sample.

According to a particular feature, the mathematical functions are polynomial functions of a given order with real coefficients.

According to a particular feature, the current for the given sample is determined by multiplying the total capacitance value of the snubber capacitor and of the additional capacitor by the derivative of the fitted mathematical function for the given sample.

According to a particular feature, the anode of the snubber diode is connected to the positive terminal of the power source and the cathode of the snubber diode is connected to the positive terminal of the snubber capacitor enabling the snubber capacitor to be charged by a current going through snubber diode and avoiding that a discharge current of the capacitor goes through the snubber diode.

Thus, it is not necessary to use any controllable switch, which is usually more expensive than diodes and also call for need of additional driver circuitry increasing even more the price of the whole system.

The snubber diode allows to charge the capacitor(s) and also allows to discharge the capacitor(s) through the parallel snubber resistor since it is not possible to have reverse current conduction through the snubber diode.

According to a particular feature, the boost converter is connected to a load, each switch of each bridge is put in a non conducting state in order to disconnect the load from the power source.

Thus, it is possible to charge the snubber capacitor or both capacitors in parallel without the need of installing any switch between the snubber circuit and the load, leading to a more efficient and less expensive system.

According to a particular feature, the load is disconnected from the power source during the charge of the snubber capacitor and of the additional capacitor.

Thus, all the current generated by the power source flows through the capacitor(s), allowing to obtain accurate information enabling the determination of the maximum power point of the power source. The monitored voltage is directly dependent on the current provided by the power source.

According to a particular feature, the apparatus further comprises means for determining the charge current of the snubber capacitor and of the additional capacitor from the monitored voltage charge of the snubber capacitor and of the additional capacitor.

Thus, it is possible to estimate the current variations from the calculation of the voltage derivative eliminating the need of expensive current sensor that leads to additional power losses and improving the cost and efficiency of the power converter.

Information enabling the determination of the maximum power point of the power are the voltage-current/voltage-power droop characteristics of the power source obtained through the pairs of estimated current and measured voltage during the charging time period.

According to a particular feature, at least a part of the switches of each bridge are put in a conducting state, enabling the first terminal of the snubber resistor to be connected to the negative terminal of the snubber capacitor.

Thus, it is possible to discharge the capacitor(s) every time that it is necessary before starting the charging period of time which will characterize the power source from the null value voltage until its maximum voltage value, also called open-circuit voltage.

According to a particular feature, the means for determining the voltage of the snubber capacitor monitor the discharge of the snubber capacitor and of the additional capacitor in order to determine the equivalent capacitance value of the snubber capacitor and the additional capacitor.

Thus, it is possible to accurately determine the actual equivalent capacitance value of both capacitors every time that the voltage-current/voltage-power characterization is performed, avoiding errors that may appear on the current estimation due to temperature and aging effects on the capacitors.

The characteristics of the invention will emerge more clearly from a reading of the following description of an example embodiment, the said description being produced with reference to the accompanying drawings, among which :

Fig. 1 is an example of a boost converter composed of three bridge devices in which the present invention is implemented;

Fig. 2 is an example of a curve representing the output current variations of a power source according to the output voltage of the power source;

Fig. 3 represents an example of a device comprising a boost converter composed of plural bridge devices;

Fig. 4 represents a table representing the switching states of the switches of the boost converter composed of three bridge devices in order to obtain different voltages on the bridges of the boost converter;

Fig. 5 is an example of voltage values on the bridges of the boost converter composed of three bridges in order to have a first step-up ratio when the periodical pattern is decomposed into eight time intervals;

Fig. 6 is an example of an algorithm for obtaining information enabling the determination of the maximum power point of the power source according to a particular mode of realisation of the present invention;

Fig. 7a is an example of snubber capacitor voltage variations measured according to the present invention;

Fig. 7b is an example of power source current variations obtained according to the present invention;

Fig. 8 is an example of an algorithm for obtaining information enabling the determination of the maximum power point of the power source according to a particular mode of realisation of the present invention;

Fig. 9a is an example of a first window which is used to determine a curve based on the fitting of suitable mathematical functions, for example polynomial functions with real coefficients, according to a particular mode of realisation of the present invention;

Fig. 9b is an example of a second window which is used to determine a curve based on the fitting of suitable mathematical functions, for example polynomial functions with real coefficients, according to a particular mode of realisation of the present invention;

Fig. 9c is an example of a third window which is used to determine a curve based on the fitting of suitable mathematical functions, for example polynomial functions with real coefficients, according to a particular mode of realisation of the present invention;

Fig. 10 is an example of an algorithm for determining the capacitance value of the capacitor(s) used for obtaining the voltage-current/voltage-power droop characteristics of the power source according to a particular mode of realisation of the present invention.

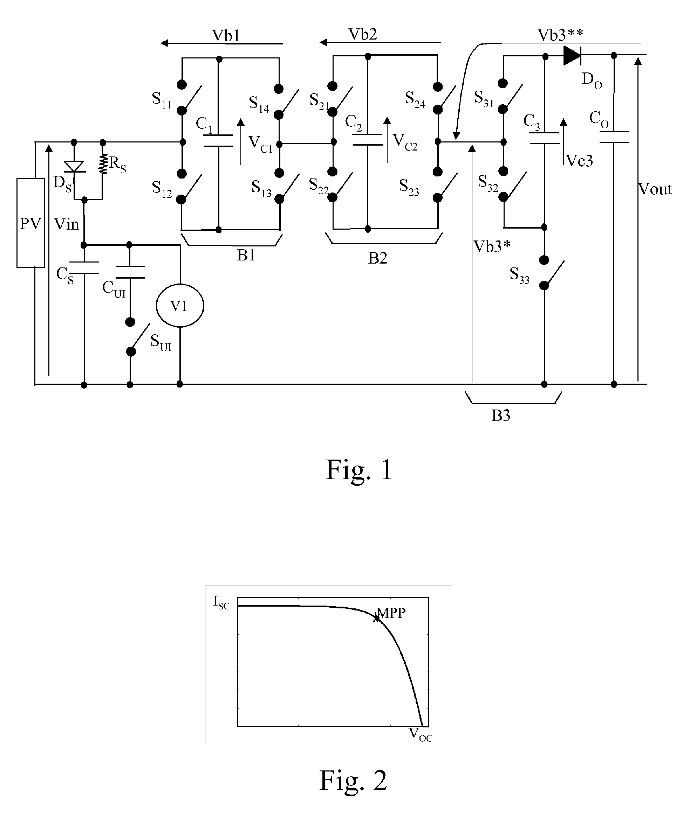

**Fig. 1** is an example of a boost converter composed of three bridge devices in which the present invention is implemented.

The boost converter is also named Reactor Less Boost Converter or an inductor less boost converter, herein named RLBC.

The present invention is described in a RLBC connected to a photovoltaic module. The present invention is also applicable in any system wherein power source has a MPP.

Basically, the inductor of the conventional DC/DC Boost converter is replaced by "k" bridge devices connected in series. Each bridge device is composed of four switches and a capacitor as shown in Fig. 1. It has to be noted here that two switches may be under the form of diodes acting as switches Si1 and Si3, where i denotes the bridge device Bi . This individual bridge structure is also named "bit". The last bit B3 can be simplified in the number of switches as shown in Fig. 1. The boost converter composed of plural bridge devices also contains an output stage comprising a diode Do and a capacitor Co.

In Fig. 1, three bits or bridge devices B1, B2 and B3 are shown and are connected in series; the third bit B3 is connected to the output stage.

A boost converter comprising a more important number of bridge devices can be obtained by duplicating the bit B1 as much as necessary.

The bit B1 is composed of four switches $S_{11}$, $S_{12}$, $S_{13}$ and $S_{14}$ and one capacitor $C_1$.

The switches $S_{11}$ and $S_{14}$ are the switches of the high side of the bit B1 and the switches $S_{12}$ and $S_{13}$ are the switches of the low side of the bit B1.

The switches $S_{11}$ and $S_{12}$ are the switches of one leg of the bit B1 and the switches $S_{14}$ and $S_{13}$ are the switches of the other leg of the bit B1.

The bit B2 is composed of four switches $S_{21}$, $S_{22}$, $S_{23}$ and $S_{24}$ and one capacitor $C_2$.

The switches $S_{21}$ and $S_{24}$ are the switches of the high side of the bit B2 and the switches $S_{22}$ and $S_{23}$ are the switches of the low side of the bit B2.

The switches $S_{21}$ and $S_{22}$ are the switches of one leg of the bit B2 and the switches $S_{24}$ and $S_{23}$ are the switches of the other leg of the bit B2.

The bit B3 is composed of three switches $S_{31}$, $S_{32}$ and $S_{33}$ and one capacitor $C_3$.

For each bit Bi with i=1 or 2, the first terminal of the switch $S_{i1}$ is connected to the second terminal of the switch $S_{i2}$. The second terminal of the switch $S_{i1}$ is connected to the second terminal of the switch $S_{i4}$ and to the positive terminal of the capacitor $C_i$. The first terminal of the switch $S_{i2}$ is connected to the negative terminal of the capacitor $C_i$ and to the first terminal of the switch $S_{i3}$. The first terminal of the switch $S_{i4}$ is connected to the second terminal of the switch $S_{i3}$.

Electric DC providing means like photovoltaic modules provide an input voltage Vin. The positive terminal of electric DC providing means is connected to the first terminal of the switch $S_{11}$.

For the bit B3, the first terminal of the switch $S_{31}$ is connected to the second terminal of the switch $S_{32}$. The second terminal of the switch $S_{31}$ is connected to the anode of the diode $D_O$ and to the positive terminal of the capacitor $C_3$. The first terminal of the switch $S_{32}$ is connected to the negative terminal of the capacitor $C_3$ and to the second terminal of the switch $S_{33}$. The first terminal of the switch $S_{33}$ is connected to the negative terminal of electric DC providing means.

The cathode of the diode $D_O$ is connected to the positive terminal of the capacitor $C_O$. The negative terminal of the capacitor $C_O$ is connected to the negative terminal of electric DC providing means.

The first terminal of the switch $S_{14}$ is connected to the first terminal of the switch $S_{21}$.

The first terminal of the switch $S_{24}$ is connected to the first terminal of the switch $S_{31}$.

The voltage on the capacitor $C_O$ is equal to Vout.

The difference of voltage between the input and the output of B1 is named Vb1, the difference of voltage between the input and the output of B2 is named Vb2 and the difference of voltage between the input and the output of B3 is named Vb3. Vb3 equals Vb3* when switch $S_{33}$ is on, and equals Vb3** when switch $S_{33}$ is off.

The difference of voltage in $C_1$ is named $V_{C1}$, the difference of voltage in $C_2$ is named $V_{C2}$ and the difference of voltage in $C_3$ is named $V_{C3}$.

The RLBC further comprises a snubber circuit.

Snubber circuits are frequently used in electrical systems with an inductive load where the sudden interruption of current flow often leads to a sharp rise in voltage across the device creating the interruption.

This sharp rise in voltage is a transient and can damage and lead to the failure of the semiconductor device. A spark is likely to be generated (arcing) and to cause electromagnetic interference. The snubber circuit prevents this undesired voltage by conducting transient current around the device. In the case of the RLBC converter the role of the snubber circuit is to avoid voltage oscillations on its input caused by the dead-time imposed between the switching of the complementary switches of each leg on each bit. Avoiding voltage oscillations, the power generation efficiency around the MPP is improved.

The snubber circuit comprises at least a capacitor $C_S$.

For example, the snubber circuit is composed of a resistor $R_S$ and a capacitor $C_S$.

In the example of Fig. 1, the snubber circuit is composed of a diode $D_S$, a resistor $R_S$ and a capacitor $C_S$.

The positive terminal of power source PV is connected to the anode of the diode $D_S$ and to the first terminal of the resistor $R_S$. The cathode of the diode $D_S$ is connected to the second terminal of the resistor $R_S$ and to a first terminal of the capacitor $C_S$.

The second terminal of the capacitor $C_S$ is connected to the negative terminal of the power source PV.

According to the invention, the RLBC further comprises means for measuring the voltage V1 of the capacitor $C_S$ of the snubber circuit.

According to the invention, the charge of the capacitor $C_S$ is monitored. According to a particular mode of realisation of the present invention, the charge of the capacitor $C_S$ is monitored in order to determine the current going through the capacitor $C_S$ in order to determine information enabling the determination of the maximum power point of the power source PV.

Information enabling the determination of the maximum power point of the power source PV are the voltage-current/voltage-power droop characteristics of the power source PV.

According to a particular mode of realisation, the discharge of the capacitor $C_S$ is monitored in order to determine the capacitor $C_S$ value.

According to a particular mode of realisation of the present invention, if the means for monitoring the voltage on the capacitor $C_S$ sample the voltage of capacitor $C_S$ at a sampling rate which is not compatible with the voltage variations on capacitor $C_S$, a supplementary capacitor $C_{UI}$ having a larger capacitance value is connected in parallel with the capacitor $C_S$ when the voltage-current/voltage-power droop characteristics and consequently the MPP of the power source PV or equivalent capacitance value determination of both capacitors needs to be performed.

For that, the positive terminal of the capacitor $C_{UI}$ is connected to the positive terminal of the capacitor $C_S$ and the negative terminal of the capacitor $C_{UI}$ is connected to the second terminal of a switch $S_{UI}$. The first terminal of the switch $S_{UI}$ is connected to the negative terminal of the capacitor $C_S$.

In operation, RLBC provides discrete values of voltage step-up ratio which are dependent on the number of available "bits". This number of discrete values of step-up ratio may respect the law:

$$n_{ratios} = 2^k$$

where "ratios" is the total number of possible step-up ratios (or duty-cycles) and "k" is the number of bits connected in series.

The voltage values imposed in each bit may respect the following law:

$$[Vc1 : Vc2 : ... : Vcn] = [1 : 2 : ... 2^{(k-1)}] \, V_{CO} / 2^k$$

where $V_{CO}$ is the stepped-up output voltage.

For obtaining a constant output voltage, it is possible to have "$n_{ratios}$" different input voltages, which will respect the following law:

$$Vin = V_{CO} / ratio_i \, , \, i = 1, 2, ... n_{ratios}$$

For the case n=3 bits of Fig. 1, [Vc1:Vc2:Vc3] = [1:2:4]Vref.

The switching pattern of the switches of each bridge Bi is defined so as to offer a voltage Vbi at the connectors of the bridge that equals + Vci, -Vci, or 0, where Vci is the voltage of the capacitor $C_i$. Moreover, the switching pattern of each bit Bi is timely defined as a succession of $2^k$ equal sub periods $\Delta T$ of the main switching period T = 1/f.

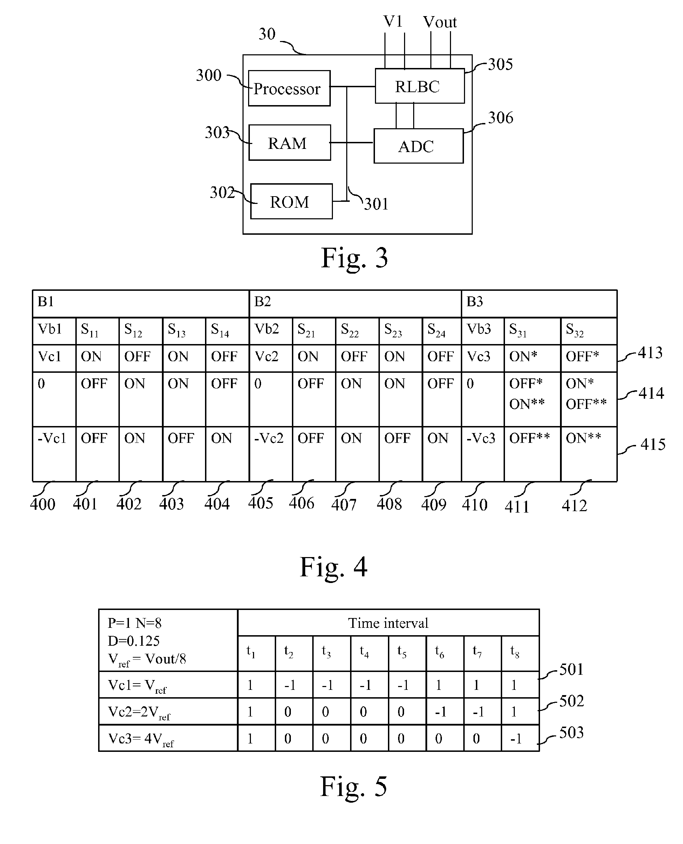

An example of the voltage values on the bridges of the boost converter composed of three bridge devices will be described in reference to the Fig. 5.

It has to be noted here that other configurations like [Vc1:Vc2:Vc3] = [2:3:4] or [Vc1:Vc2:Vc3:Vc4] = [1:1:1:4] may be used. Furthermore, $n_{ratios}$ can finally be higher than $2^k$.

The switching patterns are applied on the switches $S_{11}$, $S_{12}$, $S_{13}$, $S_{14}$, $S_{21}$, $S_{22}$, $S_{23}$, $S_{24}$, $S_{31}$, $S_{32}$ and $S_{33}$.

**Fig. 2** is an example of a curve representing the output current variations of a power source according to the output voltage of the power source.

On the horizontal axis of Fig. 2, voltage values are shown. The voltage values are comprised between null value and the open-circuit voltage Voc.

On the vertical axis of Fig. 2, current values are shown. The current values are comprised between null value and the short circuit current $I_{SC}$.

At any given light level and photovoltaic array temperature there are an infinite number of current-voltage pairs, or operating points, at which the photovoltaic array can operate. However, there exists a single MPP for a given light level and photovoltaic array temperature.

**Fig. 3** represents an example of a device comprising a boost converter composed of plural bridge devices.

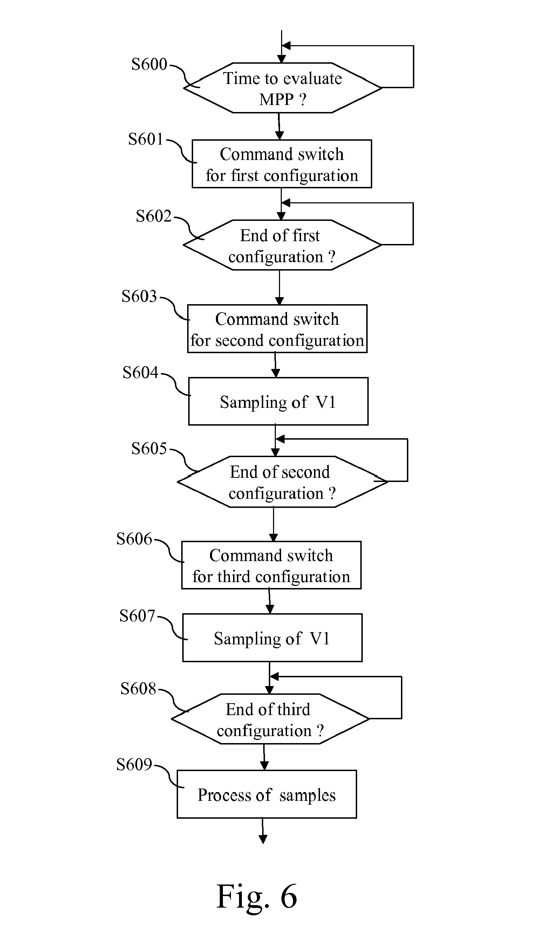

The device 30 has, for example, an architecture based on components connected together by a bus 301 and a processor 300 controlled by the programs related to the algorithms as disclosed in the Figs. 6, 8 and 10.

It has to be noted here that the device 30 is, in a variant, implemented under the form of one or several dedicated integrated circuits which execute the same operations as the one executed by the processor 300 as disclosed hereinafter.

The bus 301 links the processor 300 to a read only memory ROM 302, a random access memory RAM 303, an analogue to digital converter ADC 306 and the RLBC converter as the one disclosed in Fig. 1.

The read only memory ROM 302 contains instructions of the program related to the algorithm as disclosed in the Figs. 6, 8 and 10 which are transferred, when the device 30 is powered on to the random access memory RAM 303.

The read only memory ROM 302 memorizes the tables shown in Figs. 4 and 5.

The RAM memory 303 contains registers intended to receive variables, and the instructions of the programs related to the algorithms as disclosed in the Figs. 6, 8 and 10.

The analogue to digital converter 306 is connected to the RLBC and converts voltages representative of the voltage V1 and/or the output voltage Vout into binary information.

**Fig. 4** represents a table representing the switching states of the switches of the boost converter in order to obtain different voltages on the bridges of the boost converter.

The columns 400 to 404 are related to the bit B1, the columns 405 to 409 are related to the bit B2 and the columns 410 to 412 are related to the bit B3.

The line 413 shows that for a voltage Vb1 which is equal to Vc1, the switches $S_{11}$ and $S_{13}$ are in conductive state and the switches $S_{12}$ and $S_{14}$ are in non conductive state, for a voltage Vb2 which is equal to Vc2, the switches $S_{21}$ and $S_{23}$ are in conductive state and the switches $S_{22}$ and $S_{24}$ are in non conductive state, for a voltage Vb3* in Fig. 1 which is equal to Vc3, the switches $S_{31}$ and $S_{33}$ are in conductive state and the switch $S_{32}$ is in non conductive state.

The line 414 shows that for a voltage Vb1 which is equal to null value, the switches $S_{11}$ and $S_{14}$ are in non conductive state and the switches $S_{12}$ and $S_{13}$ are in conductive state, for a voltage Vb2 which is equal to null value, the switches $S_{21}$ and $S_{24}$ are in non conductive state and the switches $S_{22}$ and $S_{23}$ are in conductive state, for a voltage Vb3* in Fig. 1 which is equal to null value, the switches $S_{32}$ and $S_{33}$ are in conductive state and the switch $S_{31}$ is in non conductive state, for a voltage Vb3** in Fig. 1 which is equal to null value, the switches $S_{31}$ is in conductive state and the switch $S_{32}$ and $S_{33}$ are in non conductive state

The line 415 shows that for a voltage Vb1 which is equal to -Vc1, the switches $S_{11}$ and $S_{13}$ are in non conductive state and the switches $S_{12}$ and $S_{14}$ are in conductive state, for a voltage Vb2 which is equal to -Vc2, the switches $S_{21}$ and $S_{23}$ are in non conductive state and the switches $S_{22}$ and $S_{24}$ are in conductive state, for a voltage Vb3** in Fig. 1 which is equal to -Vc3, the switches $S_{31}$ and $S_{33}$ are in non conductive state and the switch $S_{32}$ is in conductive state.

**Fig. 5** is an example of voltage values on the bridges of the boost converter composed of three bridges in order to have a first step-up ratio when the periodical pattern is decomposed into eight time intervals.

Fig. 5 comprises voltage values on the bridges of the RLBC in order to have a ratio Vout/Vin= 1.14.

In the line 501, a value which is equal to 1 means that Vb1=$V_{ref}$, a value which is equal to -1 means Vb1=-$V_{ref}$ and a value which is equal to 0 means Vb1=0.

In the line 502, a value which is equal to 1 means that Vb2=2$V_{ref}$, a value which is equal to -1 means Vb2=-2$V_{ref}$ and a value which is equal to 0 means Vb2=0.

In the lines 503, a value which is equal to 1 means that Vb3=4$V_{ref}$, a value which is equal to -1 means Vb3=-4$V_{ref}$ and a value which is equal to 0 means Vb3=0.

The duration of each time interval $t_1$ to $t_8$ is $\Delta T=T/N$ (N=8), where T is the duration of the switching cycle operated by switch $S_{33}$ of the Fig. 1.

Eight time intervals are needed in order to get a ratio Vout/Vin= 1.14.

At time interval $t_1$, Vb1=$V_{ref}$, Vb2=2$V_{ref}$ and Vb3=4$V_{ref}$. At time intervals $t_2$, $t_3$, $t_4$ and $t_5$, Vb1=-$V_{ref}$ and Vb2=Vb3=0. At time intervals $t_6$ and $t_7$, Vb1=$V_{ref}$, Vb2=-2$V_{ref}$ and Vb3=0. At time interval $t_8$, Vb1=$V_{ref}$, Vb2=2$V_{ref}$ and Vb3=-4$V_{ref}$.

**Fig. 6** is an example of an algorithm for obtaining information enabling the determination of the maximum power point of the power source according to a particular mode of realisation of the present invention.

More precisely, the present algorithm is executed by the processor 300.

Information enabling the determination of the maximum power point of the power source may be the voltage-current/voltage-power droop characteristics of the power source PV.

At step S600, the processor 300 checks if it is time to characterize and evaluate the MPP of the power source PV.

The MPP may be evaluated periodically or on particular events like climatic conditions variations or under the request by a maintenance system or a person in charge of the maintenance of the system.

If it is time to evaluate the MPP of the power source PV, the processor 300 moves to step S601. Otherwise, the processor 300 returns to step S500.

At step S601, the processor 300 commands the switches of the RLBC in order to configure the RLBC in a first configuration PH1.

During the first configuration PH1, the capacitor $C_S$ is discharged.

For that, the switches $S_{12}$, $S_{13}$, $S_{22}$, $S_{23}$, $S_{32}$ and $S_{33}$ are put in ON state, i.e. in a conducting mode and the switch $S_{UI}$ is kept in OFF state, i.e. in non conducting mode.

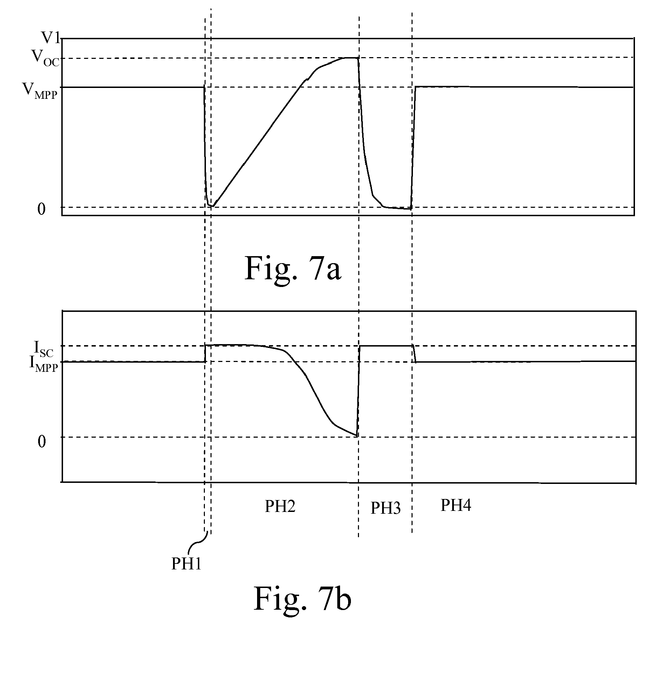

The discharge of capacitor $C_S$ is shown in Figs. 7a and 7b.

**Fig. 7a** is an example of snubber capacitor voltage variations measured according to the present invention.

The time is represented on horizontal axis of the Fig. 7a and the voltage is represented on the vertical axis of the Fig. 7a.

The voltage V1 represents the voltage on $C_S$.

**Fig. 7b** is an example of power source current variations obtained according to the present invention.

The time is represented on horizontal axis of the Fig. b and the current is represented on the vertical axis of the Fig. b.

The current represents the output current of the power source PV.

Prior to the configuration PH1, the voltage and the current provided by the power source PV correspond to previously determined MPP. During the first configuration PH1, capacitor $C_S$ is discharged through resistor $R_S$. The voltage V1 decreases from $V_{MPP}$ to null value.

The current $I_{MPP}$ moves to $I_{SC}$ current value, since the voltage on the power source PV is at the null value due to the short-circuit created by switches $S_{12}$, $S_{13}$, $S_{22}$, $S_{23}$, $S_{32}$ and $S_{33}$.

At next step S602, the processor 300 checks if it is time to stop the setting of the RLBC in the first configuration.

The setting of the RLBC in the first configuration has to be stopped once the capacitor $C_S$ is completely discharged.

When the setting of the RLBC in the first configuration has to be stopped, the processor 300 moves to step S603.

At step S603, the processor 300 commands the switches of the RLBC in order to configure the RLBC in a second configuration PH2.

During the second configuration PH2, the capacitor $C_S$ or the capacitors $C_S$ and $C_{UI}$ are charged.

For that, the switches $S_{11}$, $S_{12}$, $S_{13}$, $S_{14}$, $S_{21}$, $S_{22}$, $S_{23}$, $S_{24}$, $S_{32}$, $S_{32}$ and $S_{33}$ are put in OFF state, i.e. in a non conducting mode.

The capacitor $C_S$ is charged or if the supplementary capacitor $C_{UI}$ is used, the switch $S_{UI}$ is put in ON state, i.e. in a conducting mode and both capacitors $C_S$ and $C_{UI}$ are charged.

The capacitor $C_S$ is or capacitors $C_S$ and $C_{UI}$ are charged through the diode $D_S$ from zero voltage until $V_{OC}$, the open-circuit voltage value of the power source at a current from $I_{SC}$ to null value as disclosed in Figs. 7a and 7b.

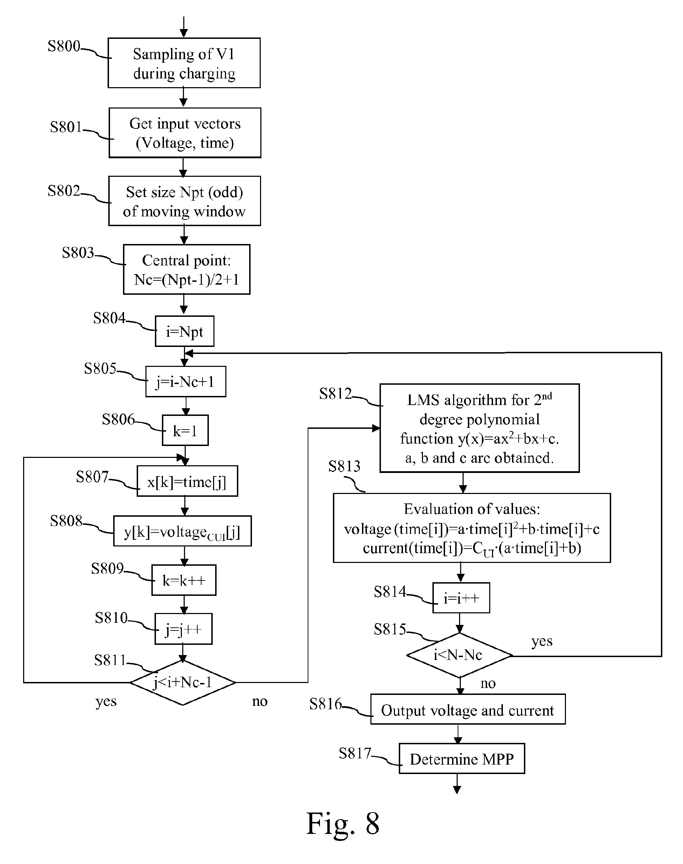

At next step S604, the processor 300 commands the sampling of the voltage V1 in order to determine the voltage-current/voltage-power droop characteristics and consequently the MPP of the power source PV as it will be disclosed in reference to Fig. 8.

At next step S605, the processor 300 checks if it is time to stop the setting of the RLBC in the second configuration.

The setting of the RLBC in the first configuration has to be stopped once the capacitor $C_S$ or capacitors $C_S$ and $C_{UI}$ are completely charged.

When the setting of the RLBC in the second configuration has to be stopped, the processor 300 moves to step S606.

At step S606, the processor 300 commands the switches of the RLBC in order to configure the RLBC in a third configuration PH3.

During the third configuration PH3, the capacitor $C_S$ or the capacitors $C_S$ and $C_{UI}$ are discharged.

For that, the switches $S_{12}$, $S_{13}$, $S_{22}$, $S_{23}$, $S_{32}$ and $S_{33}$ are put in ON state, i.e. in a conducting mode.

The capacitor $C_S$ is discharged or if the supplementary capacitor $C_{UI}$ is used, the switch $S_{UI}$ is kept in ON state, i.e. in a conducting mode and both capacitors $C_S$ and $C_{UI}$ are discharged.

The capacitor $C_S$ is or capacitors $C_S$ and $C_{UI}$ are discharged through the resistor $R_S$ from $V_{OC}$ voltage until zero at a current $I_{SC}$ on the power source as disclosed in Figs. 7a and 7b.

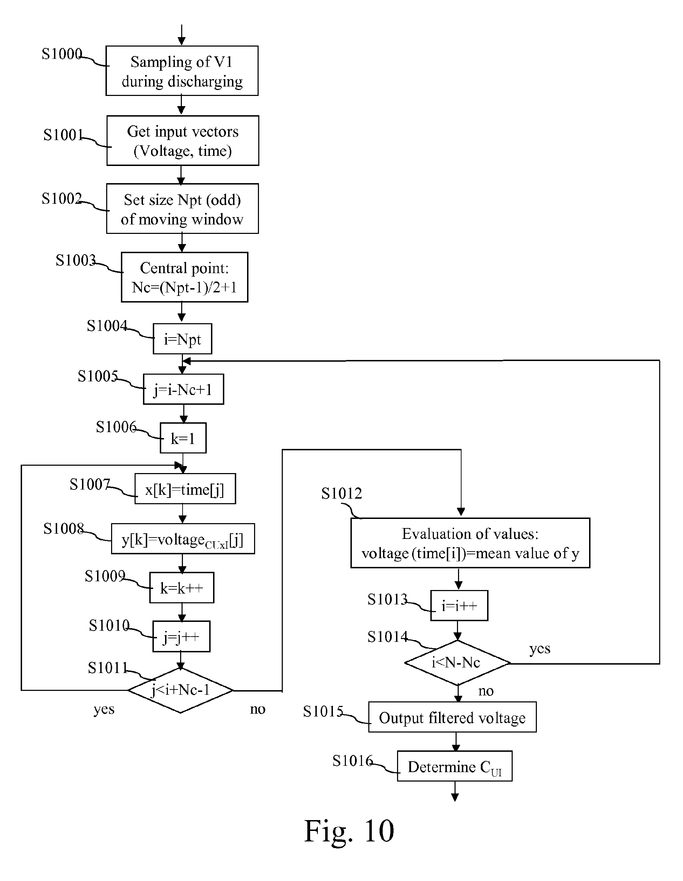

At next step S607, the processor 300 commands the sampling of the voltage V1 in order to determine the capacitance value of capacitor $C_S$ or the equivalent capacitance value of both capacitors $C_S$ and $C_{UI}$ as it will be disclosed in reference to Fig. 10.

At next step S608, the processor 300 checks if it is time to stop the setting of the RLBC in the third configuration.

The setting of the RLBC in the third configuration has to be stopped once the capacitor $C_S$ or capacitors $C_S$ and $C_{UI}$ are completely discharged.

When the setting of the RLBC in the third configuration has to be stopped, the processor 300 moves to step S609.

A next step S609, the samples are processed in order to determine the MPP of the power source as disclosed in Fig. 8 and also the capacitance value of capacitor $C_S$ or capacitors $C_S$ and $C_{UI}$ as disclosed in Fig. 10.

A new MPP point will be determined and applied to the power source in a fourth phase PH4 as shown in Figs. 7.

**Fig. 8** is an example of an algorithm for determining information enabling the determination of the maximum power point of the power source according to a particular mode of realisation of the present invention.

Information enabling the determination of the maximum power point of the power source may be the voltage-current/voltage-power droop characteristics of the power source PV.

More precisely, the present algorithm is executed by the processor 300.

The algorithm for determining the current-voltage droop characteristics and consequently the maximum power point of the power source according to the particular mode of realisation of the present invention uses the voltage V1 in order to determine the current going through the capacitor $C_{UI}$.

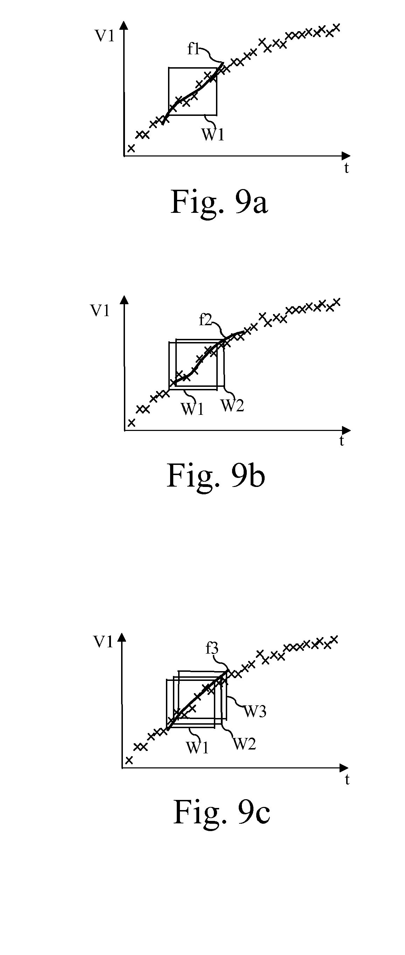

With the voltage samples of V1 a curve is obtained based on the fitting of suitable mathematical functions, for example polynomial functions with real coefficients, in pre-defined windows which will move for each sample as it will be disclosed in reference to Figs. 9a to 9c. Thus, the voltage is filtered and its derivative can be simultaneously calculated for every central point in the window in a very simple and direct way, resulting in the determination of current without the need of any additional current sensor.

The fitted mathematical function is obtained by minimizing the sum of the squares of the difference between the measured voltage $y_i$ with i=1 to N at consecutive time samples $x_i$ and mathematical functions $f(x_i)$ in order to obtain a processed voltage for the given time sample. It is done as follows.

Given N data points $(x_1,y_1),(x_2,y_2)...(x_N,y_N)$, the required fitted mathematical function can be written, for example, in the form:

$$f(x)=C_1 \cdot f_1(x)+C_2 \cdot f_2(x)+...+C_K \cdot f_K(x)$$

where $f_j(x)$, j=1,2...K are mathematical functions of x and the $C_j$, j=1,2...K are constants which are initially unknown.

The sum of the squares of the difference between f(x) and the actual values of y is given by:

$$E = \sum_{i=1}^{N}\left[f(x_i) - y_i\right]^2 = \sum_{i=1}^{N}\left[C_1 f_1(x_i) + C_2 f_2(x_i) +...+ C_K f_K(x_i) - y_i\right]^2$$

This error term is minimized by taking the partial first derivative of E with respect to each of constants, $C_j$, j=1,2,...K and putting the result to zero. Thus, a symmetric system of K linear equation is obtained and solved for $C_1$, $C_2$, ... , $C_K$. This procedure is also known as Least Mean Squares (LMS) algorithm.

At step S800, the processor 300 commands the sampling of voltage V1. The sampling is executed during the time period PH2 of Figs. 7.

At next step S801, the processor 300 gets the samples obtained at step S800 during the time period PH2. Each sample is bi-dimensional vector the coefficients of which are the voltage value and time to which voltage is measured.

At next step S802, the processor 300 determines the size of a moving window. The size of the moving window indicates the number Npt of samples to be used for determining a curve based on the fitting of suitable mathematical functions, for example polynomial functions with real coefficients. The size of the moving window is odd. For example, the size of the moving window is equal to seventy one.

**Fig. 9a** is an example of a first window which is used to determine a curve based on the fitting of suitable mathematical functions, for example polynomial functions with real coefficients, according to a particular mode of realisation of the present invention.

In Fig. 8a, the horizontal axis represents time and the vertical axis represents measured voltage V1.

Each cross represents a sample.

The window W1 is the moving window and the function f1 is the mathematical function which will be determined by the present algorithm.

At next step S803, the processor 300 determines the central point Nc of the moving window.

At next step S804, the processor 300 sets the variable i to the value Npt.

At next step S805, the processor 300 sets the variable j to i-Nc+1.

At next step S806, the processor 300 sets the variable k to one.

At next step S807, the processor 300 sets the value of x(k) to the time coefficient of sample j.

At next step S808, the processor 300 sets the value of y(k) to the voltage coefficient of sample j.

At next step S809, the processor 300 increments the variable k by one.

At next step S810, the processor 300 increments the variable j by one.

At next step S811, the processor 300 checks if the variable j is strictly lower than the sum of i and Nc minored by one.

If the variable j is strictly lower than the sum of i and Nc minored by one, the processor 300 returns to step S807. Otherwise the processor 300 moves to step S812.

At step S812, the processor 300 determines the fitted mathematical function, for example the polynomial function $y(x)=ax^2+bx+c$ using the Least Mean Square algorithm and all the x(k) and y(k) values sampled at steps S807 and S808 until the condition on S811 is reached. The mathematical function, for example the second degree polynomial function, is the function f1 shown in Fig. 8a.

The processor 300 obtains then the a, b and c real coefficients of the second degree polynomial function ([a, b,c] $\in$ $\mathfrak{R}^3$).

At next step S813, the processor 300 evaluates the filtered voltage value and the current according to the

following formulas:

$$\text{voltage (time[i])} = a \cdot \text{time[i]}^2 + b \cdot \text{time[i]} + c$$

$$\text{current(time[i])} = C_{UI} \cdot (a \cdot \text{time[i]} + b)$$

At next step S814, the processor 300 increments the variable i by one unit.

At next step S815, the processor 300 checks if i is strictly lower than N minored by Nc wherein N is the total number of voltage samples obtained at step S801.

If i is strictly lower than N minored by Nc, the processor 300 returns to step S805. Otherwise, the processor 300 moves to step S816.

By moving to step S805, the processor 300 will displace the moving window by one sample as it is disclosed in reference to Fig. 9b.

**Fig. 9b** is an example of a second window which is used to determine a curve based on the fitting of suitable mathematical functions, for example polynomial functions with real coefficients, according to a particular mode of realisation of the present invention.

In Fig. 9b, the horizontal axis represents time and the vertical axis represents measured voltage V1.

Each cross represents a sample.

The window W2 is the window W1 moved by one sample and the function f2 is the mathematical function which will be determined by the present algorithm at step S812 through the samples available on W2.

The processor 300 will execute the loop constituted by the steps S805 to S815 as far as i is strictly lower than N minored by Nc.

At each loop, the window will be moved by one sample.

**Fig. 9c** is an example of a third window which is used to determine a curve based on the fitting of suitable mathematical functions, for example polynomial functions with real coefficients, according to a particular mode of realisation of the present invention.

In Fig. 9c, the horizontal axis represents time and the vertical axis represents measured voltage V1.

Each cross represents a sample.

The window W3 is the window W3 moved by one sample and the function f3 is the mathematical function which will be determined by the present algorithm at step S812 through the samples available on W3.

At step S816, the processor 300 gets all the voltage and current values determined at the previous steps and forms a curve as the one shown in Fig. 2.

At next step S817, the processor 300 determines the MPP thanks to the voltage and current values obtained at step S816.

The new MPP can then be used for an efficient use of the power source PV.

**Fig. 10** is an example of an algorithm for determining the capacitance value of the capacitor(s) used for obtaining the voltage-current/voltage-power droop characteristics of the power source according to a particular mode of realisation of the present invention.

Electrolytic capacitors are the usual choice on DC/DC converters, and so is the capacitor $C_{UI}$.

Considering the initial value at the first time that an electrolytic capacitor becomes operative, it is well known that the capacitance value will decrease during electrolytic capacitor lifetime. Furthermore, the capacitance value is temperature dependent.

As the current values determined at step S813 are dependent of the capacitance value of $C_{UI}$, the accuracy of the calculated current strongly depends on the accuracy of the capacitance value. It is then desirable to accurately estimate the capacitance value, for example, every time that the algorithm disclosed in Fig. 8 will be executed.

During the time period PH3 of Figs. 7, the voltage V1 is monitored. As $C_{UI}$ is discharged through $R_{UI}$,

$$V1(t) = V1(t=0).e^{\frac{-t}{R_{UI}C_{UI}}}$$ where V1(t) is the voltage V1 at instant t.

Thus, according to example of Fig. 7a, V1 (t=0)=$V_{MPP}$, where t=0 is the beginning of PH2. When t = $\tau$ =$R_{UI}C_{UI}$, the following equation will be valid:

$$V1(t = R_{UI}C_{UI}) = 0.367879.V1(t=0) = 0.367879.V_{MPP}.$$

Since V1(t) is continuously sampled during the time period PH3, when V1(t) reaches above mentioned value, the constant time $\tau = R_{UI}C_{UI}$ can be estimated by the processor 300. Some filtering of the measurements is desired in order to reduce error caused by noise as it will be shown in the algorithm of Fig. 10. Finally, $C_{UI}$ value is estimated from $\tau$ and $R_{UI}$. Preferably, resistor $R_{UI}$ is a high precision power resistor. For example, the tolerance of resistor $R_{UI}$ is between $\pm 0.05\%$ and $\pm 1\%$.

At step S1000, the processor 300 commands the sampling of voltage V1. The sampling is executed during the time period PH3 of Figs. 7.

At next step S1001, the processor 300 gets the samples obtained at step S1000 during the time period PH2. Each sample is bi-dimensional vector the coefficients of which are the voltage value and time to which voltage is measured.

At next step S1002, the processor 300 determines a size of a moving window. The size of the moving window indicates the number Npt of samples to be used for determining a curve based on the fitting of suitable polynomial functions. The size of the moving window is odd. For example, the size of the moving window is equal to twenty one.

At next step S1003, the processor 300 determines the central point Nc of the moving window.

At next step S1004, the processor 300 sets the variable I to the value Npt.

At next step S1005, the processor 300 sets the variable j to i-Nc+1.

At next step S1006, the processor 300 sets the variable k to one.

At next step S1007, the processor 300 sets the value of x(k) to the time coefficient of sample j.

At next step S1008, the processor 300 sets the value of y(k) to the voltage coefficient of sample j.

At next step S1009, the processor 300 increments the variable k by one.

At next step S1010, the processor 300 increments the variable j by one.

At next step S1011, the processor 300 checks if the variable j is strictly lower than the sum of i and Nc minored by one.

If the variable j is strictly lower than the sum of i and Nc minored by one, the processor 300 returns to step S1007. Otherwise the processor 300 moves to step S1012.

At step S1012, the processor 300 determines the mean of the y(k) values accumulated every time that the step S1008 is executed for the value i under process.

At next step S1013, the processor 300 increments the variable i by one unit.

At next step S1014, the processor 300 checks if i is strictly lower than N minored by Nc wherein N is the total number of samples obtained at step S1001.

If i is strictly lower than N minored by Nc, the processor 300 returns to step S1005. Otherwise, the processor 300 moves to step S1015.

By moving to step S1005, the processor 300 will displace the moving window by one sample.

At each loop, the window will be moved by one sample.

At step S1015, the processor 300 gets the voltage values determined every time that the step S1012 is executed.

At next step S1016, the processor 300 determines the capacitor $C_{UI}$ value using the output filtered voltage determined at step S1015 and using following formulas:

$$\tau = R_{UI}C_{UI}$$

$$V1(t = R_{UI}C_{UI}) = 0.367879.V1(t = 0) = 0.367879.V_{MPP}.$$

$\tau$ is determined by accumulating the sampling period from $V_{MPP}$ at t=0 until $0.367879 V_{MPP}$ at t= $\tau = R_{UI}C_{UI}$.

$\tau$ and $R_{UI}$ being known, $C_{UI}$ can then be determined.

Naturally, many modifications can be made to the embodiments of the invention described above without departing from the scope of the present invention.

**Claims**

1. Apparatus for obtaining information enabling the determination of the maximum power point of a power source providing current intended to a boost converter composed of a number n of bridge devices connected in series, each bridge device being composed of plural switches and a capacitor, the boost converter comprising a snubber circuit comprising a snubber capacitor, **characterised in that** the apparatus for obtaining information enabling the determination of the maximum power point of the power source comprises means for monitoring the voltage of the snubber capacitor in order to obtain information enabling the determination of the maximum power point of the power source.

2. Apparatus according to claim 1, **characterised in that** the snubber circuit further comprises a snubber resistor and a snubber diode, the snubber diode and the snubber resistor being connected in parallel, the anode of the snubber diode being connected to the positive terminal of the power source, the positive terminal of the snubber capacitor being connected to the snubber resistor and to the cathode of the snubber diode, the negative terminal of the snubber capacitor being connected to the negative terminal of the power source.

3. Apparatus according to claim 1 or 2, **characterised in that** the apparatus for obtaining information enabling the determination of the maximum power point of the power source further comprises an additional capacitor, the positive terminal of which being connected to the positive terminal of the snubber capacitor, the negative terminal of which being connected to a first terminal of an additional switch, the second terminal of the additional switch being connected to the negative terminal of the snubber capacitor.

4. Apparatus according to claim 1 or 2, **characterised in that** the means for monitoring the voltage of the snubber capacitor monitor the voltage charge of the snubber capacitor and of the additional capacitor at consecutive samples.

5. Apparatus according to claim 4, **characterised in that** the measured voltage at consecutive samples surrounding a given sample are processed using a fitted mathematical function obtained by minimizing the sum of the squares of the difference between the measured voltages at consecutive samples and mathematical functions in order to obtain a processed voltage for the given sample.

6. Apparatus according to claim 5, **characterised in that** the mathematical functions are polynomial functions of a given order with real coefficients.

7. Apparatus according to claim 6, **characterised in that** the current for the given sample is determined by multiplying the total capacitance value of the snubber capacitor and of the additional capacitor by the derivative of the fitted mathematical function for the given sample.

8. Apparatus according to any of the claims 4 to 7, **characterised in that** the anode of the snubber diode is connected to the positive terminal of the power source and the cathode of the snubber diode is connected to the positive terminal of the snubber capacitor enabling the snubber capacitor to be charged by a current going through the snubber diode and avoiding that a discharge current of the capacitor goes through the snubber diode.

9. Apparatus according to claim 8, **characterised in that** the boost converter is connected to a load, each switch of each bridge is put in a non conducting state in order to disconnect the load from the power source.

10. Apparatus according to claim 9, **characterised in that** the load is disconnected from the power source during the charge of the snubber capacitor and of the additional capacitor.

11. Apparatus according to claim 10, **characterised in that** at least a part of the switches of each bridge are put in a conducting state, enabling the first terminal of the snubber resistor to be connected to the negative terminal of the snubber capacitor.

12. Apparatus according to claim 11, **characterised in that** the means for determining the voltage of the snubber capacitor monitor the discharge of the snubber capacitor and of the additional capacitor in order to determine the equivalent capacitance value of the snubber capacitor and the additional capacitor.

13. Method for obtaining information enabling the determination of the maximum power point of a power source providing current intended to a boost converter composed of a number n of bridge devices connected in series, each bridge device being composed of plural switches and a capacitor, the boost converter comprising a snubber circuit comprising a snubber capacitor, **characterised in that** the method for obtaining information enabling the determination of the maximum power point of the power source comprises the step of monitoring the voltage of the snubber capacitor in order to obtain information enabling the determination of the maximum power point of the power source.

Fig. 1

Fig. 2

Fig. 3

| B1 | | | | | B2 | | | | | B3 | | | |
|---|---|---|---|---|---|---|---|---|---|---|---|---|---|
| Vb1 | $S_{11}$ | $S_{12}$ | $S_{13}$ | $S_{14}$ | Vb2 | $S_{21}$ | $S_{22}$ | $S_{23}$ | $S_{24}$ | Vb3 | $S_{31}$ | $S_{32}$ | |
| Vc1 | ON | OFF | ON | OFF | Vc2 | ON | OFF | ON | OFF | Vc3 | ON* | OFF* | 413 |
| 0 | OFF | ON | ON | OFF | 0 | OFF | ON | ON | OFF | 0 | OFF*<br>ON** | ON*<br>OFF** | 414 |
| -Vc1 | OFF | ON | OFF | ON | -Vc2 | OFF | ON | OFF | ON | -Vc3 | OFF** | ON** | 415 |

400  401  402  403  404  405  406  407  408  409  410  411  412

Fig. 4

| P=1 N=8<br>D=0.125<br>$V_{ref}$ = Vout/8 | Time interval | | | | | | | |
|---|---|---|---|---|---|---|---|---|
| | $t_1$ | $t_2$ | $t_3$ | $t_4$ | $t_5$ | $t_6$ | $t_7$ | $t_8$ |
| Vc1= $V_{ref}$ | 1 | -1 | -1 | -1 | -1 | 1 | 1 | 1 | 501 |
| Vc2=2$V_{ref}$ | 1 | 0 | 0 | 0 | 0 | -1 | -1 | 1 | 502 |
| Vc3= 4$V_{ref}$ | 1 | 0 | 0 | 0 | 0 | 0 | 0 | -1 | 503 |

Fig. 5

**S600** — Time to evaluate MPP ?

**S601** — Command switch for first configuration

**S602** — End of first configuration ?

**S603** — Command switch for second configuration

**S604** — Sampling of V1

**S605** — End of second configuration ?

**S606** — Command switch for third configuration

**S607** — Sampling of V1

**S608** — End of third configuration ?

**S609** — Process of samples

# Fig. 6

Fig. 7a

Fig. 7b

S800 — Sampling of V1 during charging

S801 — Get input vectors (Voltage, time)

S802 — Set size Npt (odd) of moving window

S803 — Central point: Nc=(Npt-1)/2+1

S804 — i=Npt

S805 — j=i-Nc+1

S806 — k=1

S807 — x[k]=time[j]

S808 — y[k]=voltage$_{CUI}$[j]

S809 — k=k++

S810 — j=j++

S811 — j<i+Nc-1
yes    no

S812 — LMS algorithm for 2$^{nd}$ degree polynomial function y(x)=ax$^2$+bx+c. a, b and c are obtained.

S813 — Evaluation of values:
voltage (time[i])=a·time[i]$^2$+b·time[i]+c
current(time[i])=C$_{UI}$·(a·time[i]+b)

S814 — i=i++

S815 — i<N-Nc    yes
no

S816 — Output voltage and current

S817 — Determine MPP

# Fig. 8

Fig. 9a

Fig. 9b

Fig. 9c

S1000 — Sampling of V1 during discharging

S1001 — Get input vectors (Voltage, time)

S1002 — Set size Npt (odd) of moving window

S1003 — Central point: Nc=(Npt-1)/2+1

S1004 — i=Npt

S1005 — j=i-Nc+1

S1006 — k=1

S1007 — x[k]=time[j]

S1008 — y[k]=voltage$_{CUxI}$[j]

S1009 — k=k++

S1010 — j=j++

S1011 — j<i+Nc-1   yes / no

S1012 — Evaluation of values: voltage (time[i])=mean value of y

S1013 — i=i++

S1014 — i<N-Nc   yes / no

S1015 — Output filtered voltage

S1016 — Determine $C_{UI}$

# Fig. 10

Europäisches
Patentamt

European
Patent Office

Office européen
des brevets

# EUROPEAN SEARCH REPORT

**Application Number**

EP 09 16 5145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/264225 A1 (BHAVARAJU VIJAY [US] ET AL) 30 December 2004 (2004-12-30) * abstract * ----- | 1-13 | INV. H02M3/07 |

| | |
|---|---|
| | TECHNICAL FIELDS SEARCHED (IPC) |
| | H02M |

The present search report has been drawn up for all claims

| Place of search | Date of completion of the search | Examiner |
|---|---|---|
| Munich | 16 November 2009 | Hanisch, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 16 5145

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2009

| Patent document cited in search report | Publication date | Patent family member(s) | Publication date |
|---|---|---|---|
| US 2004264225 A1 | 30-12-2004 | NONE | |

EPO FORM P0459

For more details about this annex : see Official Journal of the European Patent Office, No. 12/82